(19) Europäisches Patentamt / European Patent Office / Office européen des brevets

(11) **EP 3 771 954 A1**

(12) **EUROPEAN PATENT APPLICATION**

(43) Date of publication:
03.02.2021 Bulletin 2021/05

(51) Int Cl.:
*G05B 23/02* (2006.01)  *G06N 3/12* (2006.01)

(21) Application number: 19216304.6

(22) Date of filing: 13.12.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.07.2019 US 201916526774

(71) Applicant: Hamilton Sundstrand Corporation
Charlotte, NC 28217-4578 (US)

(72) Inventors:
• BOLLAS, Georgios M.
Tolland, CT 06084 (US)
• HALE, William T.
Salem, NH 03079 (US)
• CABALLERO, Rodrigo E.
Glastonbury, CT (US)

(74) Representative: Dehns
St. Bride's House
10 Salisbury Square
London EC4Y 8JD (GB)

(54) **EVOLVED INFERENTIAL SENSORS FOR IMPROVED FAULT DETECTION AND ISOLATION**

(57) A built-in fault-detection-and-isolation (FDI) test for a system that has measurable input operating conditions and output parameters is designed. Inferential sensors, which are functional combinations of the input operating conditions and the output parameters, are evolved using genetic programming so as to be rich in information pertaining to fault conditions of the system. Simulations, based on a system model, of various combinations of the input operating conditions and the fault conditions are performed so as to provide simulated values of the inferential sensors and the output parameters. Sensitivities of the inferential sensors and the output parameters to the fault conditions and to system uncertainties are calculated. The inferential sensors are repeatedly evolved until a termination condition is achieved. The built-in test is designed based on a combination of a selected input operating condition and one or more of the inferential sensors and/or the output parameters.

FIG. 1

EP 3 771 954 A1

## Description

BACKGROUND

System uncertainty (e.g., noise) can make fault detection and isolation (FDI) difficult. The accuracy, reliability and robustness of diagnostic information obtained during maintenance testing sometimes can be compromised, due to uncertainty masking the occurrence of faults resulting in missed detections, or uncertainty mimicking faulty performance resulting in false alarms. Making FDI even more difficult is that some faults cannot be directly measured. Sensors that are configured to measure input operating conditions or output parameters might be ill-equipped for measuring various fault conditions.

SUMMARY

Apparatus and associated methods relate to a system for heat exchange with built-in fault-detection-and-identification (FDI) test design capability. The system includes a cross-flow plate/fin heat exchanger (PFHE), a plurality of input sensors, each configured to measure an input operating condition of the PFHE, one or more output sensors, each configured to measure an output parameter of the PFHE, one or more processors, and computer-readable memory. The computer-readable memory is encoded with instructions that, when executed by the one or more processors, cause the system to perform the step of a) retrieving a PFHE model that relates the output parameters to the input operating conditions and fault conditions. The computer-readable memory is encoded with instructions that, when executed by the one or more processors, cause the system to perform the step of b) creating inferential sensors, each based on a functional relation of at least two of the input operating conditions and/or the output parameters. The computer-readable memory is encoded with instructions that, when executed by the one or more processors, cause the system to perform the step of c) simulating, based on the received PFHE model, combinations of input operating conditions and fault conditions so as to provide simulated values of both the output parameters and the inferential sensors for each of the simulated combinations. The computer-readable memory is encoded with instructions that, when executed by the one or more processors, cause the system to perform the step of d) calculating parametric sensitivities of the output parameters and the inferential sensors to the fault conditions. The computer-readable memory is encoded with instructions that, when executed by the one or more processors, cause the system to perform the step of e) evolving, using genetic programming, the inferential sensors based on the calculated parametric sensitivities of the output parameters and the inferential sensors to the fault conditions. The computer-readable memory is encoded with instructions that, when executed by the one or more processors, cause the system to perform the step of f) repeating steps c) through e) until a termination condition is realized. The computer-readable memory is encoded with instructions that, when executed by the one or more processors, cause the system to perform the step of g) creating the built-in test based on a selected testing combination of input operating conditions and a selected measuring combination of the output parameters and the inferential sensors.

Some embodiments relate to a method for designing a built-in fault-detection-and-identification (FDI) test for a system that has measurable input operating conditions and output parameters. The method includes the step of a) retrieving a system model that relates the output parameters to the input operating conditions and fault conditions. The method includes the step of b) creating inferential sensors, each based on a functional relation of at least two of the input operating conditions and/or the output parameters. The method includes the step of c) simulating, based on the received system model using combinations of the input operating conditions and fault conditions, measurement values of the output parameters and inferential sensors. The method includes the step of d) calculating parametric sensitivities of the output parameters and the inferential sensors to the fault conditions. The method includes the step of e) evolving, using genetic programming, the inferential sensors based on the calculated parametric sensitivities of the output parameters and the inferential sensors to the fault conditions. The method includes the step of f) repeating steps c) through e) until a termination condition is realized. The method includes the step of g) creating the built-in test based on a selected testing combination of input operating conditions and a selected measuring combination of the output parameters and the inferential sensors.

BRIEF DESCRIPTION OF THE DRAWINGS

FIG. 1 is a flow chart of a method for designing a built-in fault-detection-and-identification (FDI) test for a system that has measurable input operating conditions and output parameters.
FIG. 2 is a schematic/block diagram of an exemplary heat exchange system with built-in fault-detection-and-identification (FDI) test design capability.

FIGS. 3A-3D are graphs of Monte Carlo simulation results of output parameters at a nominal input operating conditions.

FIGS. 4A-4D are graphs of Monte Carlo simulation results of output parameters at an optimal input operating conditions.

FIGS. 5A-5C are graphs of Monte Carlo simulation results of initial inferential sensors at the optimal input operating conditions.

FIG. 6 is a chart depicting overall correct classification rates of various combinations of output parameters and inferential sensors.

FIGS. 7A-7B are graphs of Monte Carlo simulation results of and evolved inferential sensor at both nominal and optimal input operating conditions.

DETAILED DESCRIPTION

Apparatus and associated methods relate to designing a built-in fault-detection-and-isolation (FDI) test for a system that has measurable input operating conditions and output parameters. Inferential sensors, which are functional combinations of the input operating conditions and the output parameters, are evolved using genetic programming so as to be rich in information pertaining to fault conditions of the system. Simulations, based on a system model, of various combinations of the input operating conditions and the fault conditions are performed so as to provide simulated values of the inferential sensors and the output parameters. Sensitivities of the inferential sensors and the output parameters to the fault conditions are calculated and used in optimality criterion. The inferential sensors are repeatedly evolved until a termination condition is achieved. The built-in test is designed based on a combination of a selected one of the input operating conditions and one or more of the inferential sensors and/or the output parameters corresponding to the achieved termination condition

Inferential sensing is a method of creating indirect system measurements *(i.e.,* soft sensors or inferential sensors) for system conditions that cannot be measured directly. An inferential sensing system can refer to instrumentation and algorithms that infer values of such system conditions, which cannot be directly measured, by using a functional combination or relation of two or more of the measurable input operating conditions and the output parameters. These functional relations used to create inferential sensors can be based on physical laws and domain system knowledge or can be empirically determined. Empirical determination of functional relations used to create inferential sensors can be based on regression models, support vector machines, neural networks, and/or genetic algorithms.

Inferential sensors can offer more accurate and robust information for use in detection and isolation of fault conditions that cannot be directly measured. Accurate and robust information is information that is indicative of a system condition, even when such information is collected in the presence of system uncertainties. Such accuracy and robust information can enable detection and isolation of faults that might not be detectable or able to be isolated without such inferential sensors. Such improved fault detection and isolation (FDI) can enable testing during real time operation. Such improved fault detection and isolation (FDI) can facilitate condition-based maintenance.

Below, an algorithmic method derived from latent variable modeling/surrogate modeling/symbolic regression and optimization techniques will be detailed. This algorithmic method can be used to develop inferential sensors for FDI that are accurate and robust. This method is a combination of genetic and mathematical programming in which accurate and robust inferential sensors are evolved and input operating conditions well suited for FDI are selected. When the system is operated at the selected input operating conditions, the inferential sensors are able to use existing measurement capabilities, especially of the output parameters, to reduce (if not eliminate) the impact of uncertainty through the mathematical operations of the latent variable model so as to provide accurate and robust information regarding one or more fault conditions. The algorithmic method can be used with modern cyber-physical systems, in which increased uncertainty during operation and maintenance can otherwise negatively impact system performance, reliability and safety.

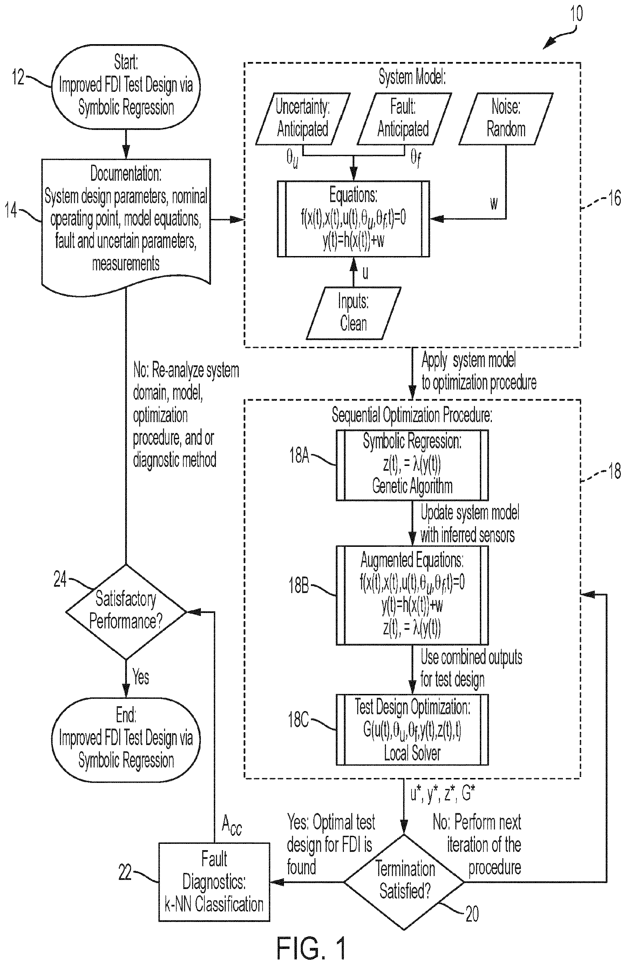

FIG. 1 is a flow chart of a method for designing a built-in fault-detection-and-isolation (FDI) test for a system that has measurable input operating conditions **u** and output parameters y. The method uses an accurate steady-state or dynamic model of the system, which is subject to fault conditions $\theta_f$ of interest. The system model models a healthy system as well as a system with one or more fault conditions $\theta_f$. This system model is utilized throughout the method in a number of ways. First, the system model is used to simulate values of the output parameters **y** at a given input operating condition **u** with anticipated uncertainties $\theta_u$, and to evolve inferential sensors **z** using a genetic programming algorithm. The system model is then updated with the inferential sensors z to calculate the parametric sensitivities of the inferential sensors **z** with respect to fault conditions $\theta_f$ and uncertainties $\theta_u$. These parametric sensitivities are used for FDI test design optimization to calculate the best input operating conditions **u** for the execution of the built-in test. Such design optimization includes selection of measured output parameters **y** and inferential sensors **z** and determination of an effective input operating condition **u**. The model, which is augmented with the evolved inferential sensors **z,** is also used to run Monte Carlo simulations over the ranges of the uncertainties $\theta_u$, to perform fault condition diagnostics and to assess the effectiveness of the built-in test design.

In FIG. 1, method 10 begins at step 12 and is usually performed by a processor-based apparatus. Method 10 then proceeds to step 14, where a system model, nominal input operating conditions, fault conditions, and uncertainty parameters are retrieved from computer-readable memory.

The method continues to step 16, at which step the processor is configured to simulate the system operation, based on the received system model, using combinations of input operating conditions $\mathbf{u}$ and fault conditions $\theta_f$, so as to provide simulated values of the output parameters $\mathbf{y}$ for each of the simulated combinations of input operating conditions $\mathbf{u}$ and fault conditions $\theta_f$.

Then, the method proceeds to step 18, where the inferential sensors $\mathbf{z}(i)$ are either created or evolved using a genetic programing algorithm. First, at step 18A, the inferential sensors $\mathbf{z}(i)$ are initially created and subsequently evolved using genetic programming. The initial inferential sensors $\mathbf{z}(0)$ of an initial population $\Lambda(0)$ of inferential sensors can be determined based on physical laws and domain system knowledge, which pertain to the particular system modeled by system equations $\mathbf{f}^{[f]}$. Later iterations of inferential sensors are evolved by either: i) selecting the best individuals from the population $\Lambda(i)$ and saving them for them for the next generation $\Lambda(i+1)$ (elitism); ii) selecting pairs of well-performing individuals from the population $\Lambda(i)$ and partially exchanging functional elements with one another, and creating a pair of new individuals with functional elements opposite of the original pair to save for the next generation $\Lambda(i+1)$ (crossover); and iii) selecting individuals from the population $\Lambda(i)$, changing some functional aspect of the individual, and saving this new individual for the next generation $\Lambda(i+1)$ (mutation).

Then, at step 18B, the system model is updated to include the inferential sensors $\mathbf{z}(i)$. A set of input operating conditions $\mathbf{u}(i)$ is initially created and subsequently evolved. Subsequent selection of operating conditions $\mathbf{u}(i)$ can be made based on performance metrics of the built-in test of the previous generation. The system is then simulated, using the set of operating conditions $\mathbf{u}(i)$ so as to obtain simulated measurement values of the output parameters $\mathbf{y}(i)$ and the inferential sensors $\mathbf{z}(i)$.

Then, at step 18C, an objective function $G(i)$ is symbolically created, based on the functional relations of the inferential sensors $\mathbf{z}(i)$. The objective function $G(i)$ is evaluated so as to determine parametric sensitivities of the output parameters $\mathbf{y}(i)$ and the inferential sensors $\mathbf{z}(i)$ to the fault conditions $\theta_f$ and the anticipated uncertainties $\theta_u$ for the set of input operating conditions $\mathbf{u}(i)$. The sensitivities of the output parameters $\mathbf{y}(0)$ and the inferential sensors $\mathbf{z}(0)$ to the fault conditions $\theta_f$ and the anticipated uncertainties $\theta_u$ are determined.

After the sensitivities of the inferential sensors $\mathbf{z}(i)$ have been calculated, the method then advances to step 20, where a termination condition is evaluated. Various termination conditions can be used at step 20. For example, in some embodiments, the sequential optimization step 18 of method 10 is repeated a predetermined number of times. In some embodiments, the sequential optimization step 18 of method 10 is repeated until a change in the sensitivities between iterations is less than a threshold value. If, at step 20, the termination condition is not met, the method returns to step 18, where both inferential sensors $\mathbf{z}(i)$ and input operating conditions $\mathbf{u}(i)$ are further evolved. If, however, at step 20, the termination condition is met, then method 10 proceeds to step 22.

At step 22, FDI diagnostics and performance assessment of the built-in test design are performed. Various methods can be used in performing FDI diagnostics and assessing the performance of the built-in test design, such as neural networks, principal component analysis, and support vector machines. FDI diagnostics can include using a fault condition classification method to assign to each simulation, based on the simulated measurements of output parameters y and inferential sensors $\mathbf{z}$, a fault condition classification (*e.g.*, which fault condition, if any, is expected to have been present based on the simulation result). The fault condition classification can then be compared with the actual simulation condition (*i.e.*, does the fault condition classification agree with the simulation parameters). Such comparisons can then be used to assess the quality of the built-in test design.

After FDI diagnostics and test assessment have been performed, method 10 advances to step 22, where the performance assessment of the built-in test design is evaluated. If, at step 22, the built-in test design meets an accuracy criterion, then method 10 advances to step 24 and ends. If, at step 22, however, the built-in test design does not meet the accuracy criterion, then method 10 returns to step 14, where the system model, the optimization procedure, and/or the diagnostic method can be re-analyzed. Various accuracy criteria can be used at step 22. For example, a correct-classification threshold. For example, in some embodiments, a correct-classification threshold can be 90%, 95%, 98%, 99% or 100%.

Each of the steps 12-22 of method 10 will now be described in greater detail. The system model, which is retrieved from computer-readable memory at step 14, can be implemented as a set of differential equations that models a dynamic system and its anticipated faults and uncertainty:

$$\mathbf{f}^{[f]}\left(\dot{\mathbf{x}}^{[f]}(t), \mathbf{x}^{[f]}(t), \mathbf{u}(t), \theta_u, \theta_f^{[f]}, t\right) = \mathbf{0}, \forall [f] \in \left\{[0], ..., [N_f]\right\} \tag{1}$$

Where $\mathbf{f}^{[f]}$ is the system of equations that are continuously differentiable and factorable over its domain. The superscript [f] denotes the fault condition of interest and $N_f$ is the total number of faults studied (with [f] = [0] representing the fault-free system). The variable $\mathbf{x}^{[f]}$ is a vector of system states, $\mathbf{u}$ is a vector of admissible input operating conditions, $\theta_u$ is a vector of uncertain parameters, $\theta_f$ is a vector of parameters corresponding to fault conditions, and $t$ is time.

The system outputs are expressed as:

$$\mathbf{y}^{[f]}(t) = \mathbf{h}\left(\mathbf{x}^{[f]}(t)\right) + \mathbf{w} \ \forall [f] \in \{[0], \dots, [N_f]\} \tag{2}$$

where $\mathbf{y}^{[f]}$ is the vector of system output parameters corresponding to the fault condition [f], $\mathbf{h}$ is the system of equations mapping the system states $\mathbf{x}$ to the output parameters $\mathbf{y}$, and $\mathbf{w}$ is a vector of measurement noise.

The input operating conditions $\mathbf{u}$ and the output parameters $\mathbf{y}$ will be later used in the initial creation and evolution of the inferential sensors $\mathbf{z}$. These initial inferential sensors $\mathbf{z}$ can be determined based on physical laws and domain system knowledge, which pertain to the particular system modeled by system equations $\mathbf{f}^{[f]}$. Using the system output parameters $\mathbf{y}$ and input conditions $\mathbf{u}$, inferential sensors can be developed:

$$\mathbf{z}^{[f]}(t) = \lambda\left(\mathbf{y}^{[f]}(t), \mathbf{u}(t)\right) \ \forall [f] \in \{[0], \dots, [N_f]\} \tag{3}$$

where $\mathbf{z}^{[f]}$ is a vector of inferential sensors corresponding to the fault condition [f], and $\lambda$ is a system of equations mapping the input conditions $\mathbf{u}$ and the output parameters $\mathbf{y}$ to the inferential sensors $\mathbf{z}$. The inferential sensors $\mathbf{z}$ can be augmented to the original system model.

The initial conditions at time to for equations (1), (2), and (3) are expressed as:

$$\mathbf{y}_0 = \begin{cases} \mathbf{f}\left(\dot{\mathbf{x}}(t_0), \mathbf{x}(t_0), \mathbf{u}(t_0), \boldsymbol{\theta}_u, \boldsymbol{\theta}_f, t_0\right) = \mathbf{0}, \\ \mathbf{y}(t_0) = \mathbf{h}\left(\mathbf{x}(t_0)\right), \\ \mathbf{z}(t_0) = \lambda\left(\mathbf{y}(t_0), \mathbf{u}(t_0)\right) \end{cases} \tag{4}$$

where $\mathbf{y}_0$ is the combined vector of initial conditions.

The general formulation for the sequential optimization procedure of the built-in test design, described with respect to step 18, is as follows:

$$G^* = \max_{u \in U, y \in Y, z \in Z} G\left(\mathbf{u}, \widetilde{\boldsymbol{\theta}}_u, \widetilde{\boldsymbol{\theta}}_f, \mathbf{y}, \mathbf{z}, t\right)$$

$$s.t. \ \mathbf{f}\left(\dot{\mathbf{x}}^{[f]}(t), \mathbf{x}^{[f]}(t), \mathbf{u}(t), \widetilde{\boldsymbol{\theta}}_u, \widetilde{\boldsymbol{\theta}}_f, t\right) = \left(\mathbf{f}^{[1]}, \dots, \mathbf{f}^{[N_f]}\right) = \mathbf{0},$$

$$\mathbf{y}(t) = \mathbf{h}\left(\mathbf{x}(t)\right) + \mathbf{w} = \left(\mathbf{y}^{[1]}, \dots, \mathbf{y}^{[N_f]}\right),$$

$$\mathbf{z}(t) = \lambda\left(\mathbf{y}(t), \mathbf{u}(t)\right) = \left(\mathbf{z}^{[1]}, \dots, \mathbf{z}^{[N_f]}\right), \tag{5}$$

$$y_0 = \begin{cases} \mathbf{f}\left(\dot{\mathbf{x}}(t_0), \mathbf{x}(t_0), \mathbf{u}(t_0), \boldsymbol{\theta}_u, \boldsymbol{\theta}_f, t_0\right) = \mathbf{0}, \\ \mathbf{y}(t_0) = \mathbf{h}\left(\mathbf{x}(t_0)\right), \\ \mathbf{z}(t_0) = \lambda\left(\mathbf{y}(t_0), \mathbf{u}(t_0)\right) \end{cases}$$

where $G^*$ is the continuous and factorable objective function that defines the FDI capability of a selected set of input operating conditions $\mathbf{u}$, output parameters $\mathbf{y}$, and inferential sensors $\mathbf{z}$. $\mathbf{f}(\mathbf{x}, \mathbf{u}, \widetilde{\theta}_u, \widetilde{\theta}_f) = (\mathbf{f}^{[0]}, \dots, \mathbf{f}^{[N_f]}) = \mathbf{0}$ is the system of differential algebraic equations combined for all fault conditions from equation (1) and augmented with the state variables $\mathbf{x} = (\mathbf{x}^{[0]}, \dots, \mathbf{x}^{[N_f]})$ and parameters corresponding to the fault conditions at their anticipated (~) values $\widetilde{\boldsymbol{\theta}}_f = \left(\widetilde{\boldsymbol{\theta}}_f^{[0]}, \dots, \widetilde{\boldsymbol{\theta}}_f^{[N_f]}\right)$. $\widetilde{\theta}_u$ is the vector of uncertainties at their anticipated values; $\mathbf{y}$ is the combined vector of system outputs; **z** is the combined vector of inferential sensors.

The objective function $G$ can be appropriately chose for the particular system and fault conditions. For example, $G$ can be chosen to be a stochastic-distance-optimality ($D_S$-optimality) information criterion, which leverages the Fisher Information Matrix (FIM) to reduce the joint confidence region between the uncertainties $\theta_u$ and fault conditions $\theta_f$. $D_S$-optimality can maximize the sensitivity of the output parameters **y** to the fault conditions $\theta_f$ (thereby improving isolation) while reducing their sensitivity to the uncertainties $\theta_u$ (thereby improving detection). The general formulation of the $D_S$-optimalitycriteria is express as:

$$G\left(\mathbf{u}, \widetilde{\boldsymbol{\theta}}_u, \widetilde{\boldsymbol{\theta}}_f, \mathbf{y}, \mathbf{z}, t\right) = \psi(\mathbf{H}) = \left| H_{ff} - H_{fu} H_{uu}^{-1} H_{fu}^T \right| \tag{6}$$

where $\Psi$ is the test design criterion (*e.g.*, $D_S$-optimality), **H** is the Fisher Information Matrix (FIM), and $H_{ff}$, $H_{fu}$, $H_{uf}$, and $H_{uu}$ are submatrix blocks in the FIM that provide information on the relationship between: fault conditions, fault conditions and uncertainties, uncertainties and fault conditions, and uncertainties, respectively. The information obtained from the FIM depends on the selected combination of inferential sensors **z** and output parameters **y** to be used in the built-in test design. The FIM can be calculated by taking the partial derivatives of the selected combination of inferential sensors **z** and output parameters **y** using the binary vector $\mathbf{a} = (a_1, ..., a_{N_y+N_z})$, with respect to the uncertainties $\theta_u$ and fault conditions $\theta_f$.

$$\mathbf{H} = \begin{bmatrix} H_{ff} & H_{fu} \\ H_{fu}^T & H_{uu} \end{bmatrix} = (\mathbf{1}^T\mathbf{a})^{-1} \sum_{i=1}^{N_y+N_z} \sum_{j=1}^{N_y+N_z} a_i a_j \sigma_{ij}^{-2} \mathbf{Q}_i^T \mathbf{Q}_j \tag{7}$$

where $(\mathbf{1}^T\mathbf{a})^{-1}$ is a normalization factor equal to the number of inferential sensors **z** and output parameters **y** in the combination selected, the elements of **a** correspond to their respective output parameter **y** or inferential sensor **z**, $\sigma_{i,j}$ is the known variance between the i-th and j-th signals corresponding to the i-th and j-th output, whether they be output parameters **y** or inferential sensors **z**, and $\mathbf{Q}_i$ is the sensitivity matrix of the i-th output containing the partial derivatives with respect to anticipated uncertainties $\widetilde{\theta}_u$ and fault conditions $\widetilde{\theta}_f$. The binary vector **a** can be used as a decision variable in equation (5) to select or discriminate agains sensors that are more accurate or problematic. The general formulation of the measured normalized output sensitivity is:

$$\mathbf{Q}_i = \begin{bmatrix} \frac{\partial \mathbf{y}_i}{\partial \widetilde{\theta}_{f,1}}\Big|_{\widetilde{\theta}_f, \widetilde{\theta}_{u,1}} & \cdots & \frac{\partial \mathbf{y}_i}{\partial \widetilde{\theta}_{f,N_f}}\Big|_{\widetilde{\theta}_f, \widetilde{\theta}_{u,1}} & \frac{\partial \mathbf{y}_i}{\partial \widetilde{\theta}_{u,1}}\Big|_{\widetilde{\theta}_f, \widetilde{\theta}_{u,1}} & \cdots & \frac{\partial \mathbf{y}_i}{\partial \widetilde{\theta}_{u,1}}\Big|_{\widetilde{\theta}_f, \widetilde{\theta}_{u,1}} \\ \vdots & \ddots & \vdots & \vdots & \ddots & \vdots \\ \frac{\partial \mathbf{y}_i}{\partial \widetilde{\theta}_{f,1}}\Big|_{\widetilde{\theta}_f, \widetilde{\theta}_{u,N}} & \cdots & \frac{\partial \mathbf{y}_i}{\partial \widetilde{\theta}_{f,N_f}}\Big|_{\widetilde{\theta}_f, \widetilde{\theta}_{u,N}} & \frac{\partial \mathbf{y}_i}{\partial \widetilde{\theta}_{u,1}}\Big|_{\widetilde{\theta}_f, \widetilde{\theta}_{u,N}} & \cdots & \frac{\partial \mathbf{y}_i}{\partial \widetilde{\theta}_{u,1}}\Big|_{\widetilde{\theta}_f, \widetilde{\theta}_{u,N}} \end{bmatrix}, \forall i = 1, ..., N_y \tag{8}$$

where $N$ represents the number of samples used in the sensitivity calculation. For dynamic tests the sensitivities are calculated at each time point, thus $N = N_t$, and for steady-state tests the sensitivities are calculated at each operating point, thus $N = N_{test}$. The general formulation of the inferential sensor sensitivity is similarly calculated:

$$\mathbf{Q}_i = \begin{bmatrix} \frac{\partial \mathbf{z}_i}{\partial \widetilde{\theta}_{f,1}}\Big|_{\widetilde{\theta}_f, \widetilde{\theta}_{u,1}} & \cdots & \frac{\partial \mathbf{z}_i}{\partial \widetilde{\theta}_{f,N_f}}\Big|_{\widetilde{\theta}_f, \widetilde{\theta}_{u,1}} & \frac{\partial \mathbf{z}_i}{\partial \widetilde{\theta}_{u,1}}\Big|_{\widetilde{\theta}_f, \widetilde{\theta}_{u,1}} & \cdots & \frac{\partial \mathbf{z}_i}{\partial \widetilde{\theta}_{u,1}}\Big|_{\widetilde{\theta}_f, \widetilde{\theta}_{u,1}} \\ \vdots & \ddots & \vdots & \vdots & \ddots & \vdots \\ \frac{\partial \mathbf{z}_i}{\partial \widetilde{\theta}_{f,1}}\Big|_{\widetilde{\theta}_f, \widetilde{\theta}_{u,N}} & \cdots & \frac{\partial \mathbf{z}_i}{\partial \widetilde{\theta}_{f,N_f}}\Big|_{\widetilde{\theta}_f, \widetilde{\theta}_{u,N}} & \frac{\partial \mathbf{z}_i}{\partial \widetilde{\theta}_{u,1}}\Big|_{\widetilde{\theta}_f, \widetilde{\theta}_{u,N}} & \cdots & \frac{\partial \mathbf{z}_i}{\partial \widetilde{\theta}_{u,1}}\Big|_{\widetilde{\theta}_f, \widetilde{\theta}_{u,N}} \end{bmatrix}, \forall i = 1, ..., N_z \tag{9}$$

Calculating the sensitivities of the inferential sensors for the Ds-optimality criterion is a little more complex than calculating the sensitivities of the outputs of the selected combination of inferential sensors **z** and output parameters **y**. Since the inferential sensors z are functions of the output parameters **y**, calculating the partial derivatives of the inferential sensors **z** with respect to the anticipated uncertainties $\widetilde{\theta}_u$ and fault conditions $\widetilde{\theta}_f$ can be performed using the chain rule. Thus, equation (9) can be reformulated as follows:

$$\mathbf{Q}_i =$$

$$\begin{bmatrix} \sum_{l=1}^{N_y} \frac{\partial z_i}{\partial y_l} \frac{\partial y_l}{\partial \tilde{\theta}_{f,1}} \Big|_{\tilde{\theta}_f, \tilde{\theta}_{u,1}} & \cdots & \sum_{l=1}^{N_y} \frac{\partial z_i}{\partial y_l} \frac{\partial y_l}{\partial \tilde{\theta}_{f,N_f}} \Big|_{\tilde{\theta}_f, \tilde{\theta}_{u,1}} & \sum_{l=1}^{N_y} \frac{\partial z_i}{\partial y_l} \frac{\partial y_l}{\partial \tilde{\theta}_{u,1}} \Big|_{\tilde{\theta}_f, \tilde{\theta}_{u,1}} & \cdots & \sum_{l=1}^{N_y} \frac{\partial z_i}{\partial y_l} \frac{\partial y_l}{\partial \tilde{\theta}_{u,N_f}} \Big|_{\tilde{\theta}_f, \tilde{\theta}_{u,1}} \\ \vdots & \ddots & \vdots & \vdots & \ddots & \vdots \\ \sum_{l=1}^{N_y} \frac{\partial z_i}{\partial y_l} \frac{\partial y_l}{\partial \tilde{\theta}_{f,1}} \Big|_{\tilde{\theta}_f, \tilde{\theta}_{u,N}} & \cdots & \sum_{l=1}^{N_y} \frac{\partial z_i}{\partial y_l} \frac{\partial y_l}{\partial \tilde{\theta}_{f,N_f}} \Big|_{\tilde{\theta}_f, \tilde{\theta}_{u,N}} & \sum_{l=1}^{N_y} \frac{\partial z_i}{\partial y_l} \frac{\partial y_l}{\partial \tilde{\theta}_{u,1}} \Big|_{\tilde{\theta}_f, \tilde{\theta}_{u,N}} & \cdots & \sum_{l=1}^{N_y} \frac{\partial z_i}{\partial y_l} \frac{\partial y_l}{\partial \tilde{\theta}_{u,N_f}} \Big|_{\tilde{\theta}_f, \tilde{\theta}_{u,N}} \end{bmatrix},$$

$$\forall z = 1, \ldots, N_z \tag{10}$$

where symbolic differentiation is used to calculate the partial derivatives of the inferential sensors $\mathbf{z} = [z_1, \ldots, z_{N_z}]$ with respect to the output parameters $\mathbf{y}$, and forward sensitivity analysis is used to calculate the partial derivatives of the measured outputs $\mathbf{y} = \{y_1, \ldots, y_{N_y}\}$ with respect to the anticipated uncertainties $\tilde{\theta}_u$ and fault conditions $\tilde{\theta}_f$.

As further described with reference to step 18, genetic programming is implemented to create an evolving population of $N_{pop}$ of varying-complexity latent variable models $\Lambda = \{z_1, \ldots, z_{N_{pop}}\}$ (using functional relations selected from a list of basis functions), whose independent variables are the measured output parameters $\mathbf{y}$ and input operating conditions $\mathbf{u}$. These basis functions can utilize domain expert knowledge of the key physics pertaining to the system and faults of interest to better capture the evidence of faults. The first generation of individuals in the genetic program procedure can be randomly generated from these basis functions. This population of individuals (*i.e.,* individual inferential sensors $z_i$) then undergoes evolution each iteration of step 18, where a percentage of the population is selected for direct reproduction, crossover, and mutation. After evolution, the best performing individual in terms of richness of information for FDI, based on the selected metric/objective (*e.g.,* richest Fisher Information Matrix), is selected from the population and used in optimizing the system operating point u to further enhance FDI capability. Once the new optimal operating point is found using the selected measured outputs and inferential sensors, the measured outputs (*i.e.,* independent variables to the inferential sensors model equations) are updated and the next generation of evolution in the genetic program is performed. This process continues until the termination condition of step 20 is met, where the set of the best performing individual inferential sensor(s) $z_i/\mathbf{z}$ of the final genetic program procedure and the optimal set of input operating conditions $\mathbf{u}$ of the final optimization procedure are provided for diagnostics.

At step 22, FDI diagnostic is performed, based on the optimized built-in test design. There are many different methods available for FDI deployment once a set of input operating conditions $\mathbf{u}$ is selected along with a combination of output parameters $\mathbf{y}$ and inferential sensors $\mathbf{z}$, such as neural networks, principal component analysis, and support vector machines. Because of its simplicity, the k-nearest neighbors (k-NN) algorithm can be chosen, for example. The k-NN method of classification can be described as a method of supervised learning that attempts to classify a given observation $\mathbf{y} = (y_1, \ldots, y_{N_y})$ to the class $c^{[f]}$ with the highest estimated probability, where y is a sampled system observation of unknown class $c^y$ (*i.e.,* fault condition $\theta_f$ to be determined) used for FDI. This is accomplished by first obtaining a training data set of historical observations $Y^{train}$ and their respective classes $C^{train} = \left\{ c_1^{train}, \ldots, c_{N_{train}(N_f+1)}^{train} \right\}$.

The training data set used in this work is obtained from running $N^{train}$ Monte Carlo simulations for the given uncertainty domain. Next, a positive integer k (usually odd) and y is provided. The k-NN classifier then finds the k training data points $Y^{k-NN}$ of class $C^{k-NN} = \left\{ c_1^{k-NN}, \ldots, c_k^{k-NN} \right\}$ closest to y. Then, the conditional probability of each class $c^{[f]}$, [f]=[0],... ,[$N_f$], for each individual observation $y_i$; i=1,...,$N_y$, is estimated as the fraction of points in $Y^{k-NN}$ with $c^{k-NN} = c^{[f]}$:

$$P_i\left(c^y = c^{[f]} \middle| y_i\right) = \frac{1}{k} \sum_{j=1}^{k} \begin{cases} 1, & \text{if } c_j^{k-NN} = c^{[f]} \\ 0, & \text{otherwise} \end{cases}, \forall ([f], i) \tag{11}$$

Lastly, the class that y belongs to is estimated using a majority vote of the individual observation's conditional probabilities $P_i$; i=1,...,$N_y$, each weighted with their respective predetermined factor $\alpha_i$; i=1,... ,$N_y$. The concluding class is the one with the highest majority vote based on conditional probability, defined as:

$$\hat{c}^{[j]}: j \in \underset{[f] \in \{[0],\dots,[N_f]\}}{\arg\max} P\left(c^y = c^{[f]} \middle| \mathbf{y}\right) = \sum_{i=1}^{N_y} \alpha_i P_i\left(c^y = c^{[f]} \middle| \mathbf{y}\right) \tag{12}$$

In the specific example disclosed below equal voting (*i.e.,* $\alpha_i = N_y^{-1}$, $i = 1,\dots,N_y$) will be used, but such weighting might not always be the optimal weighting, such as, for example, in situations where some outputs (*i.e.,* output parameters **y** or inferential sensors **z**) are more reliable than others.

The overall accuracy of the k-NN classification is then gauged by running $N^{test}$ Monte Carlo simulations to create a new set of observations $Y^{test}$ of class $C^{test} = \left\{ c_1^{test}, \dots, c_{N_{test}(N_f+1)}^{test} \right\}$, independent from the training data $Y^{train}$. Each test observation is classified using the trained k-NN according to equation (12), and the percentage of correct classifications is calculated as:

$$A_{cc} = \frac{1}{N_{test}(N_f+1)} \sum_{n=1}^{N_{test}(N_f+1)} \begin{cases} 1, if\ \hat{c}_n^{[f]} = c_n^{test} \\ 0, otherwise \end{cases} \tag{13}$$

where $\hat{c}_n^{[j]}$ is the estimated class of test observation $\mathbf{y}_n$ from equation (12) and $c_n^{test}$ is the actual class of $\mathbf{y}_n$. Note, the method above is for only the measured outputs of the system. To incorporate the inferential sensors **z** determined from equation (5) simply add them into the classification method as if they are additional output parameters **y.**

Various systems can be configured with built-in fault-detection-and-identification (FDI) test design capability. A heat exchange system, for example is one such system having measurable input operating conditions and output parameters. Heat exchange systems can be modeled, and have fault conditions that are specific to the particular system.

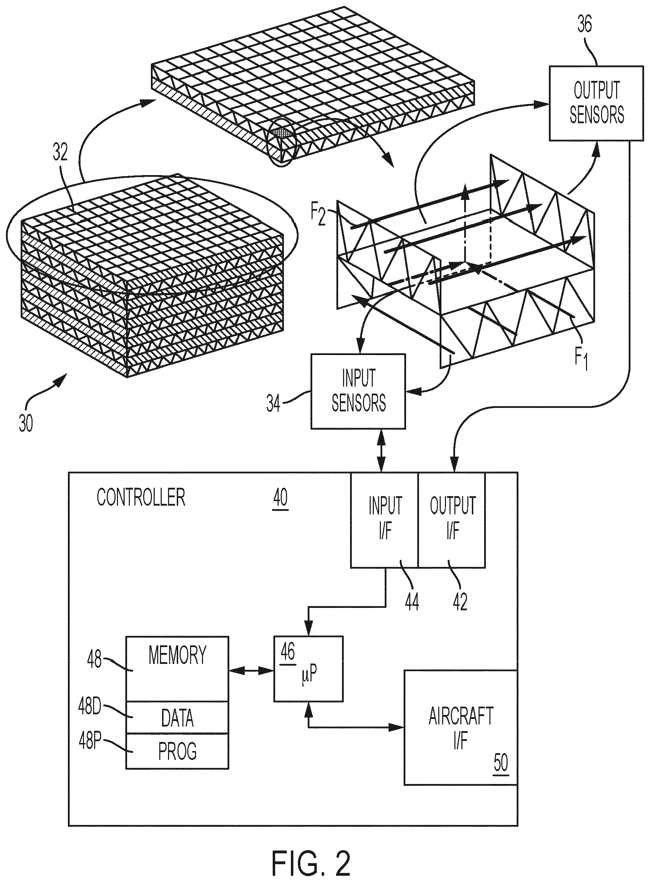

FIG. 2 is a schematic/block diagram of an exemplary heat exchange system with built-in fault-detection-and-isolation (FDI) test design capability. In FIG. 2, heat exchange system 30 includes cross-flow plate/fin heat exchanger (PFHE) 32, input operating condition sensors 34, output parameter sensors 36 and controller 40. Plate/fin heat exchanger 32 can be used in air management system of an aircraft, for example. Plate/fin heat exchanger 32 exchanges heat between fluid streams F1 and F2 which flow through adjacent fluid channels which are configured in a quadrature arrangement such that the directions of flow for the two streams are oriented at right angles one to another. A system model for such a cross-flow plate/fin heat exchanger can be found in Palmer et al., "Optimal design of tests for heat exchanger fouling identification," Applied Thermal Engineering 95 (2016), pages 382-393, which is hereby incorporated by reference in its entirety.

Input operating condition sensors 34 are configured to sense various measureable input operating conditions, such as temperatures and/or pressures of fluid streams F1 and F2 at their respective input ports or manifolds. Output parameters sensors 36 are configured to sense various measureable output parameters, such as temperatures and/or pressures of fluid streams F1 and F2 at their respective output ports or manifolds. Controller 40 includes input sensor interface 40, output sensor interface 42, processor 44, memory 46, and aircraft interface 48.

Processor 44, in one example, is configured to implement functionality and/or process instructions for execution within heat exchange system 30, so as to design a built-in FDI test. For instance, processor 44 can be capable of receiving from and/or processing instructions stored in program memory 46P. Processor 44 receives signals indicative of measured input operating conditions via input sensor interface 40. Processor 44 also receives signals indicative of measured output parameters via output sensor interface 42. Processor 44 can then execute a method for designing a built-in FDI test, such as the one disclosed above with reference to FIG. 1. In performing such a method as disclosed above, processor 44 can retrieve a system model from data memory 46D. Processor 44 can then execute the steps disclosed in FIGS. 1 and design an FDI test. The designed test can then be executed by processor 44, and then processor 44 can report results or alarms to a pilot via aircraft interface 48.

In various embodiments, heat exchange system 30 can be realized using the elements illustrated in FIG. 2 or various other elements. For example, processor 44 can include any one or more of a microprocessor, a control circuit, a digital signal processor (DSP), an application specific integrated circuit (ASIC), a field-programmable gate array (FPGA), or other equivalent discrete or integrated logic circuitry.

Memory 46 can be configured to store information within heat exchange system 30 during operation. Memory 46, in some examples, is described as computer-readable storage media. In some examples, a computer-readable storage media can include a non-transitory medium. The term "non-transitory" can indicate that the storage medium is not embodied in a carrier wave or a propagated signal. In certain examples, a non-transitory storage medium can store data that can, over time, change (*e.g.,* in RAM or cache). In some examples, memory 46 is a temporary memory, meaning that a primary purpose of memory 46 is not long-term storage. Memory 46, in some examples, is described as volatile memory, meaning that memory 46 does not maintain stored contents when power to heat exchange system 30 is turned off. Examples of volatile memories can include random access memories (RAM), dynamic random access memories (DRAM), static random access memories (SRAM), and other forms of volatile memories. In some examples, memory 46 is used to store program instructions for execution by processor 44. Memory 46, in one example, is used by software or applications running on heat exchange system 30 (*e.g.,* a software program implementing electrical control of an electrotherapeutic signal provide to biological tissue engaged by an electrosurgical instrument) to temporarily store information during program execution, such as, for example, in data memory 46D.

In some examples, memory 46 can also include one or more computer-readable storage media. Memory 46 can be configured to store larger amounts of information than volatile memory. Memory 46 can further be configured for long-term storage of information. In some examples, memory 46 includes non-volatile storage elements. Examples of such non-volatile storage elements can include magnetic hard discs, optical discs, flash memories, or forms of electrically programmable memories (EPROM) or electrically erasable and programmable (EEPROM) memories.

Aircraft interface 48 can be used to communicate information between heat exchange system 30 and a user (*e.g.,* a surgeon or technician). Aircraft interface 48 can include a communications module. Aircraft interface 48 can include various user input and output devices. For example, User interface can include various displays, audible signal generators, as well switches, buttons, touch screens, mice, keyboards, etc.

Aircraft interface 48, in one example, utilizes the communications module to communicate with external devices via one or more networks, such as one or more wireless or wired networks or both. The communications module can include a network interface card, such as an Ethernet card, an optical transceiver, a radio frequency transceiver, or any other type of device that can send and receive information. Other examples of such network interfaces can include Bluetooth, 3G, 4G, and Wi-Fi radio computing devices as well as Universal Serial Bus (USB) devices.

Plate/fin heat exchanger 32 has system states that include mass flow, temperature, and pressure of both cold fluid stream F1 and hot fluid stream F2. Measureable input operating conditions **u** include a mass flow rate of the hot stream: $u_1 = \dot{m}_{h,in}(kg/s)$. System uncertainties include the cold air inlet stream moisture content, temperature, and mass flow rate $\theta_u = (w_{c,in}, T_{c,in}, \dot{m}_{c,in})$, the distributions of which are tabulated in Table 1. Fault conditions of the system include particulate fouling in the cold stream expressed as thermal fouling resistance $\theta_f^{[f]} = \left( R_f^{[f]} \right),$ which can negatively impact the heat transfer effectiveness. Three levels of fouling are studied: 20% blocked, 50% blocked, and 80% blocked. The measured outputs of the system are the temperatures and pressures of the outlet streams $\mathbf{y} = (y_1, y_2, y_3, y_4) = (T_{c,out}, T_{h,cout}, P_{c,out}, P_{h,out})$.

**Table 1: Description of the uncertainties $\theta_u$ and faults $\theta_f$ studied and their normally distributed N(μ,σ2) values with mean μ and variance σ2.**

| Faults and Uncertainties | Parameters | Uncertainty Distribution |
|---|---|---|
| Ram Inlet Air Moisture Content [kg H$_2$O/kg dry air] | $\theta_{u,1} = w_{H_2O}$ | $N(2.0, 0.0625)$ |
| Ram Inlet Air Temperature [deg C] | $\theta_{u,2} = T_{ram,in}$ | N(30.0, 1.0) |
| Ram Inlet Air Mass Flow [kg/s] | $\theta_{u,3} = \dot{m}_{ram,in}$ | $N(1.0, 0.0025)$ |
| Ram Inlet Air Pressure [Pa] | $\theta_{u,r} = P_{ram,in}$ | $N(10^5, 6.25 \times 10^{-6})$ |
| Ram Inlet Air Particulate Fouling: Thermal Fouling Resistance [m$^2$K/W] | | |
| Fault-Free: 0% Blocked | $\theta_{f,1}^{[0]} = R_f^{[0]}$ | $N(0.00, 0.0)$ |
| Fault 1: 20% Blocked | $\theta_{f,1}^{[1]} = R_f^{[2]}$ | $N(1.60 \times 10^{-3}, 0.0)$ |
| Fault 2: 50% Blocked | $\theta_{f,1}^{[2]} = R_f^{[2]}$ | $N(4.00 \times 10^{-3}, 0.0)$ |
| Fault 3: 80% Blocked | $\theta_{f,1}^{[3]} = R_f^{[3]}$ | $N(6.40 \times 10^{-3}, 0.0)$ |

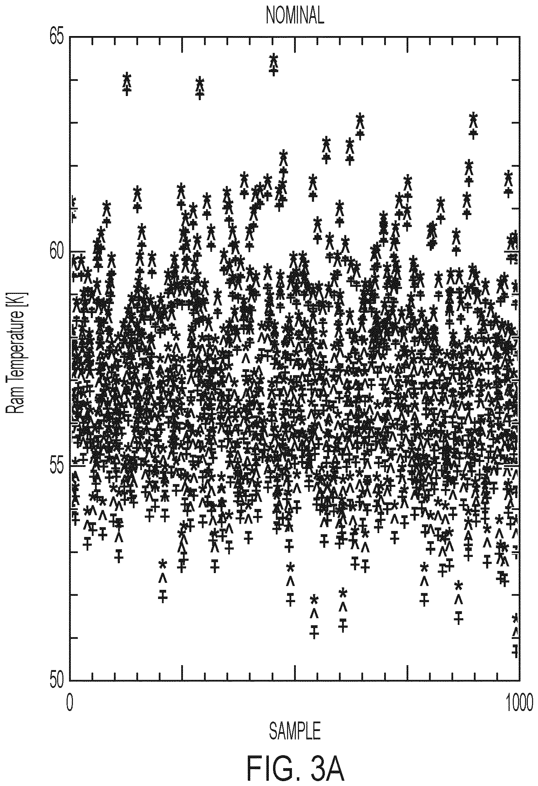

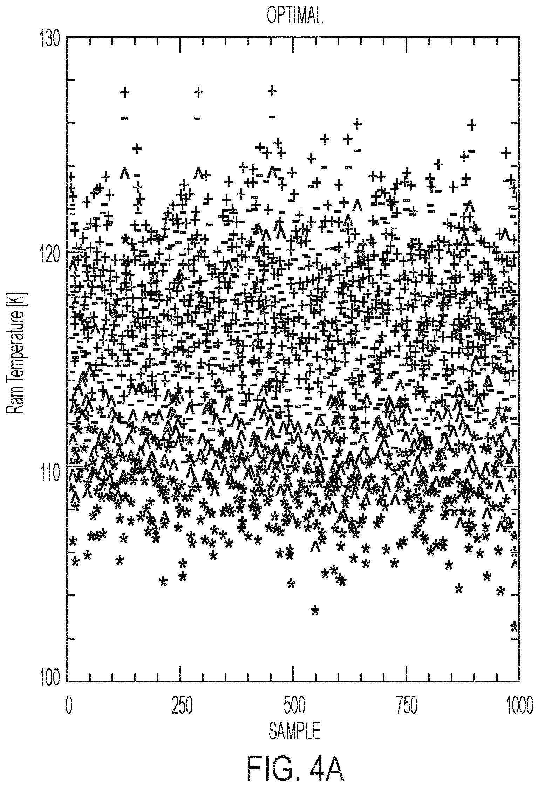

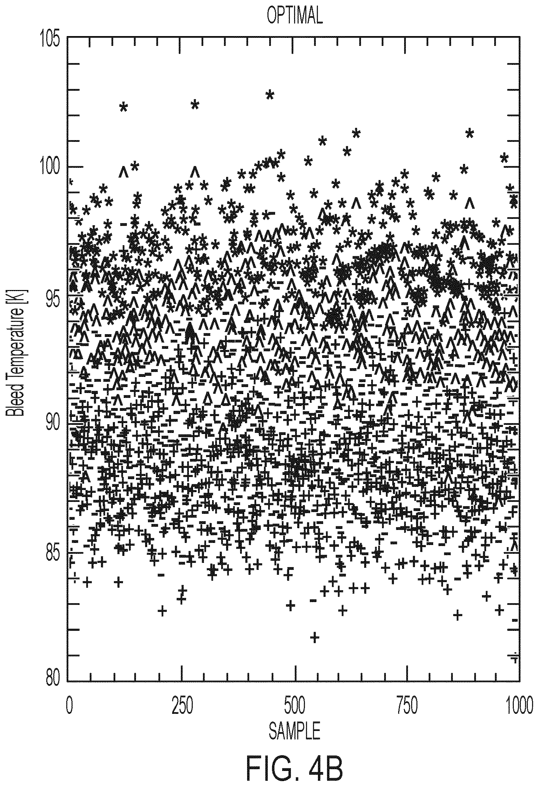

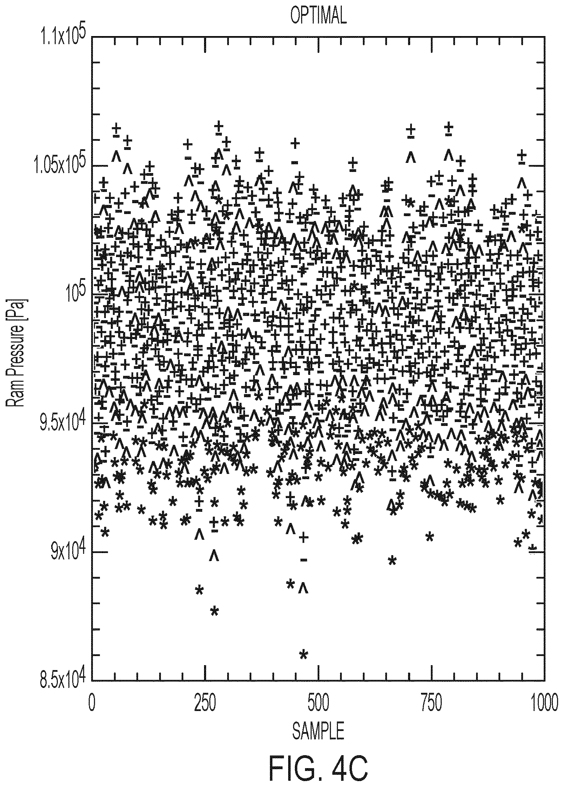

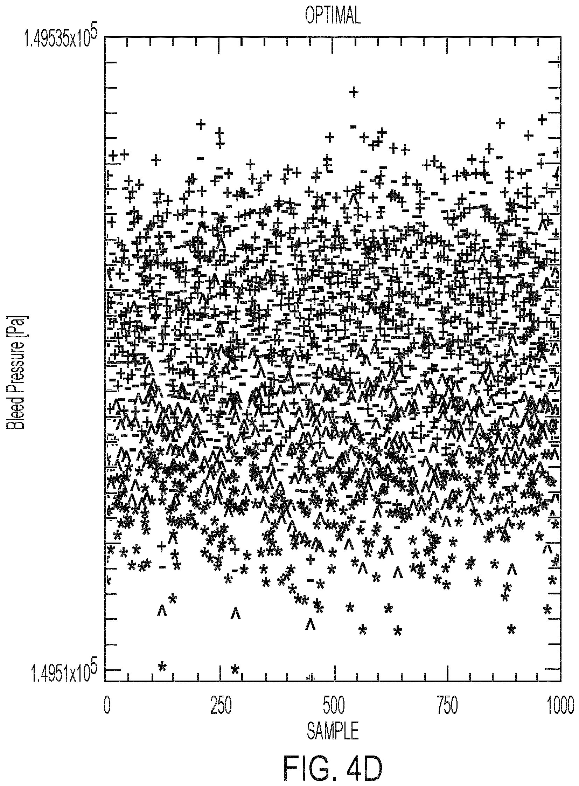

Using the uncertainties and faults reported in Table 1, a Monte Carlo simulation of 1,000 points was conducted. The PFHE system was simulated at two different input operating conditions $\mathbf{u}_{1,nom}$ and $\mathbf{u}_{1,opt}$ so as to understand the impact that different input operating conditions can have on diagnosing faults. The nominal input operating condition $\mathbf{u}_{nom}$ has a mass flow rate of 0.25 kg/s, while the optimal input operating condition $\mathbf{u}_{opt}$ has a mass flow rate of 1.00 kg/s. The simulated measured values of the output parameters $\mathbf{y}_{1-4}$ are shown in FIGS. 3A-4D, where "Ram" indicates the cold stream and "Bleed" indicates the hot stream. FIGS. 3A-3D are graphs of Monte Carlo simulation results of output parameters $\mathbf{y}_{1-4}$, respectively, at nominal input operating conditions $\mathbf{u}_{1,nom}$. FIGS. 4A-4D are graphs of Monte Carlo simulation results of output parameters $\mathbf{y}_{1-4}$, respectively, at optimal input operating conditions $\mathbf{u}_{1,opt}$. Each of FIGS. 3A-3D show four different distributions of the output parameter depicted in the graph, one distribution for each of the four fault conditions $\theta_f^{[f]} = \left( \theta_{f,0}^{[0]}, \theta_{f,1}^{[1]}, \theta_{f,2}^{[2]}, \theta_{f,3}^{[3]} \right)$.

The graph depicted in FIG. 3A includes a horizontal axis and a vertical axis. The horizontal axis is indicative of the sample number of the 1000 point Monte Carlo simulation. The vertical axis is indicative of the output parameter $y_1$, which is temperature of the cold outlet fluid stream $T_{c,out}$. The output parameter $y_1$ is simulated for all four fault conditions $\theta_f^{[f]} = \left( \theta_{f,0}^{[0]}, \theta_{f,1}^{[1]}, \theta_{f,2}^{[2]}, \theta_{f,3}^{[3]} \right)$. Fouling condition $\theta_{f,0}^{[0]}$ (*i.e.,* no fouling) is indicated by a + symbol. Fouling condition $\theta_{f,1}^{[1]}$ (*i.e.,* 20% blocked) is indicated by a - symbol. Fouling condition $\theta_{f,2}^{[2]}$ (*i.e.,* 50% blocked) is indicated by a ^ symbol. Fouling condition $\theta_{f,3}^{[3]}$ (*i.e.,* 80% blocked) is indicated by a* symbol. The distributions, which correspond to each of the fault conditions $\theta_f$, overlap one another due to the uncertainties $\theta_u$ makes them the four distributions nearly indistinguishable, creating challenges for FDI.

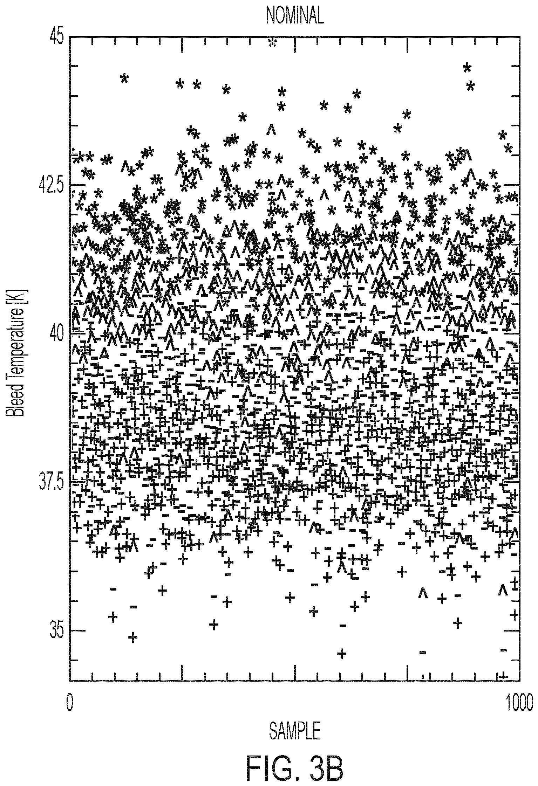

The graph depicted in FIG. 3B includes a horizontal axis and a vertical axis. The horizontal axis is indicative of the sample number of the 1000 point Monte Carlo simulation. The vertical axis is indicative of the output parameter $y_2$, which is temperature of the hot outlet fluid stream $T_{h,out}$. The output parameter $y_2$ is also simulated for all four fault conditions $\theta_f^{[f]} = \left( \theta_{f,0}^{[0]}, \theta_{f,1}^{[1]}, \theta_{f,2}^{[2]}, \theta_{f,3}^{[3]} \right)$. Again, fouling condition $\theta_{f,0}^{[0]}$ (*i.e.,* no fouling) is indicated by a + symbol. Fouling condition $\theta_{f,1}^{[1]}$ (*i.e.,* 20% blocked) is indicated by a - symbol. Fouling condition $\theta_{f,2}^{[2]}$ (*i.e.,* 50% blocked) is indicated by a + symbol. Fouling condition $\theta_{f,3}^{[3]}$ (*i.e.,* 80% blocked) is indicated by a * symbol. The distributions, which correspond to each of the fault conditions $\theta_f$, again overlap one another due to the uncertainties $\theta_u$ makes them the four distributions nearly indistinguishable, creating challenges for FDI.

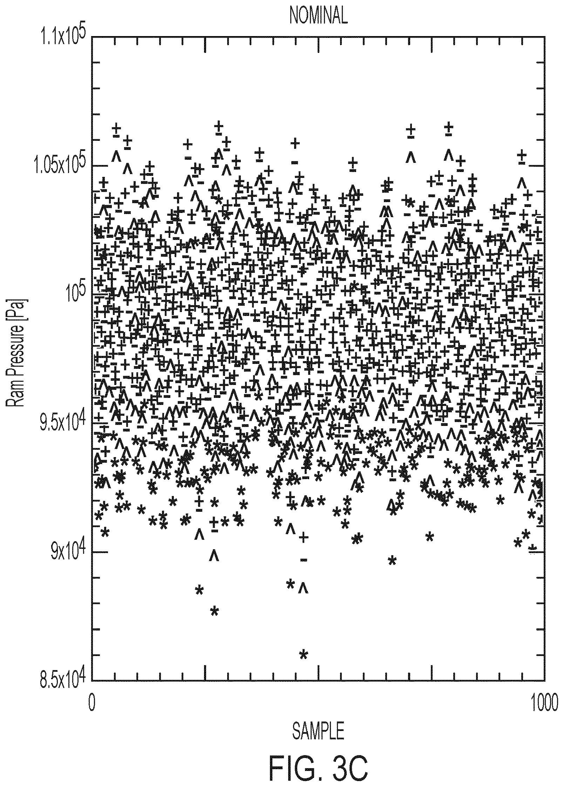

The graph depicted in FIG. 3C includes a horizontal axis and a vertical axis. The horizontal axis is indicative of the sample number of the 1000 point Monte Carlo simulation. The vertical axis is indicative of the output parameter $y_3$, which is pressure of the cold outlet fluid stream $P_{c,out}$. The output parameter $y_3$ is again simulated for all four fault conditions $\theta_f^{[f]} = \left( \theta_{f,0}^{[0]}, \theta_{f,1}^{[1]}, \theta_{f,2}^{[2]}, \theta_{f,3}^{[3]} \right)$, which are again indicated by the symbols used in FIGS. 3A and 3B.

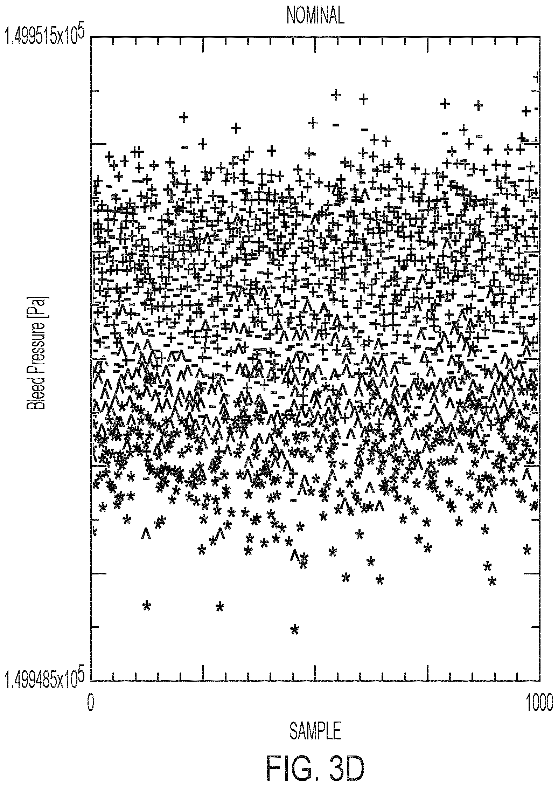

The graph depicted in FIG. 3D includes a horizontal axis and a vertical axis. The horizontal axis is indicative of the sample number of the 1000 point Monte Carlo simulation. The vertical axis is indicative of the output parameter $y_4$, which is pressure of the hot outlet fluid stream $P_{h,out}$. The output parameter $y_4$ is again simulated for all four fault conditions $\theta_f^{[f]} = \left( \theta_{f,0}^{[0]}, \theta_{f,1}^{[1]}, \theta_{f,2}^{[2]}, \theta_{f,3}^{[3]} \right)$, which are again indicated by the symbols used in FIGS. 3A-3C. The distributions shown in both FIGS. 3C and 3D again overlap one another, in a fashion similar to the overlaps depicted in FIGS. 3A and 3B. Such overlapping distributions indicate that FDI will be challenging for the nominal input operating condition $\mathbf{u}_{1,nom}$ using output parameters $\mathbf{y}_{1-4}$.

The graphs depicted in FIGS. 4A-4D reveal results of Monte Carlo simulations, which were performed identically to those corresponding to FIGS. 3A-3D, except that instead of using the nominal operating condition $\mathbf{u}_{nom}$, the optimal operating condition $\mathbf{u}_{opt}$ is used. As evident in FIGS 4A-4D the overlap of the four distributions corresponding to the four fault conditions is substantial for both the "nominal" and "optimal" operating points, although there is a slight improvement in separation for the "optimal" ram temperature.

To confirm this, k-NN classification was done using the measured outputs with an additional Monte Carlo simulation of 10,000 points to train the classifier (at both inputs as well). The results from the k-NN classification are shown in Tables 2 and 3 as confusion matrices. The confusion matrices show the classification rates of each measured output, with the overall correct classification rate $A_{CC}$ displayed above their respective matrix. The diagonal elements of each confusion matrix represent the percentage of classifications that are correctly predicted, with the off elements representing the percentage of false alarms and incorrect classifications. As expected from the output plots, the overall correct classification rates were found to be very poor, ranging from 25%-55% for the two operating points.

**Table 2: confusion matrices for each output at the nominal operating point using a k-NN value of 21.**

| $y_1$: Ram Temp | $A_{CC} =$ 0.2685 | | | | $y_2$: Bleed Temp | $A_{CC} =$ 0.4778 | | | |
|---|---|---|---|---|---|---|---|---|---|
| Predicted | Actual | | | | Predicted | Actual | | | |
| | $c^{[0]}$ | $c^{[1]}$ | $c^{[2]}$ | $c^{[3]}$ | | $c^{[0]}$ | $c^{[1]}$ | $c^{[2]}$ | $c^{[3]}$ |
| $\hat{c}^{[0]}$ | **0.26** | 0.23 | 0.24 | 0.19 | $\hat{c}^{[0]}$ | **0.51** | 0.38 | 0.14 | 0.01 |
| $\hat{c}^{[1]}$ | 0.28 | **0.27** | 0.27 | 0.26 | $\hat{c}^{[1]}$ | 0.31 | **0.35** | 0.35 | 0.05 |
| $\hat{c}^{[2]}$ | 0.24 | 0.23 | **0.23** | 0.24 | $\hat{c}^{[2]}$ | 0.15 | 0.20 | **0.34** | 0.23 |
| $\hat{c}^{[3]}$ | 0.22 | 0.26 | 0.26 | **0.31** | $\hat{c}^{[3]}$ | 0.03 | 0.07 | 0.27 | **0.71** |

| $y_3$: Ram Pressure | $A_{CC} =$ 0.3638 | | | | $y_4$: Bleed Pressure | $A_{CC} =$ 0.5303 | | | |
|---|---|---|---|---|---|---|---|---|---|
| Predicted | Actual | | | | Predicted | Actual | | | |
| | $c^{[0]}$ | $c^{[1]}$ | $c^{[2]}$ | $c^{[3]}$ | | $c^{[0]}$ | $c^{[1]}$ | $c^{[2]}$ | $c^{[3]}$ |
| $\hat{c}^{[0]}$ | **0.32** | 0.28 | 0.22 | 0.01 | $\hat{c}^{[0]}$ | **0.55** | 0.37 | 0.10 | 0.00 |
| $\hat{c}^{[1]}$ | 0.34 | **0.33** | 0.27 | 0.05 | $\hat{c}^{[1]}$ | 0.31 | **0.35** | 0.24 | 0.02 |
| $\hat{c}^{[2]}$ | 0.19 | 0.20 | **0.25** | 0.23 | $\hat{c}^{[2]}$ | 0.12 | 0.25 | **0.44** | 0.21 |
| $\hat{c}^{[3]}$ | 0.15 | 0.19 | 0.26 | **0.71** | $\hat{c}^{[3]}$ | 0.02 | 0.03 | 0.22 | **0.77** |

To illustrate the benefit of inferential sensors in FDI, in reducing the impact of uncertainty and improving the separation of fault conditions, three arbitrarily chosen equations for inferential sensors $z_1$, $z_2$ and $z_3$ were initially created using the output parameters $y_1$, $y_2$, $y_3$ and $y_4$ as independent variables. These inferential sensors are given by:

$$z_1 = \sqrt{(y_4 - y_3)^2}$$
$$z_2 = exp(y_2/y_1) \tag{14}$$
$$z_3 = y_1^3 - y_2^3,$$

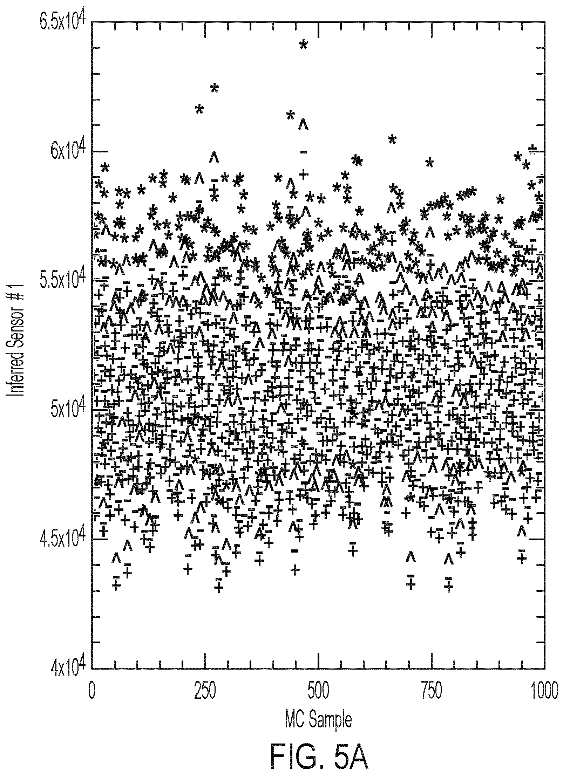

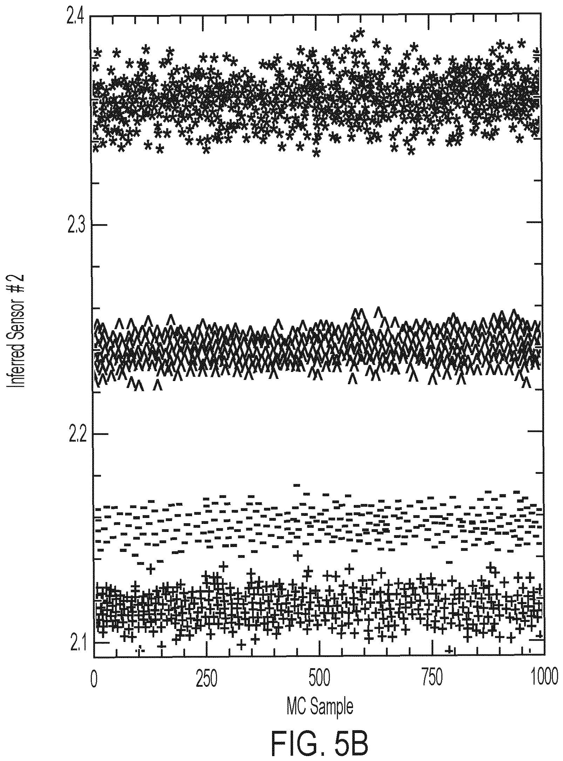

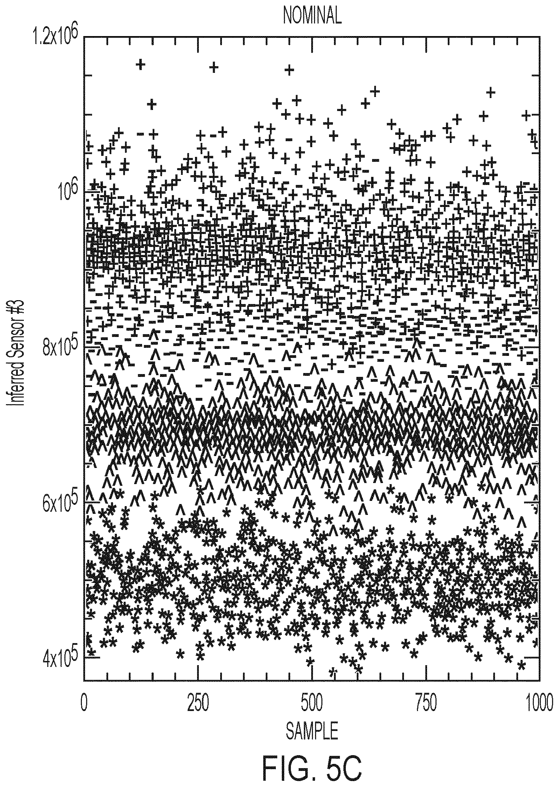

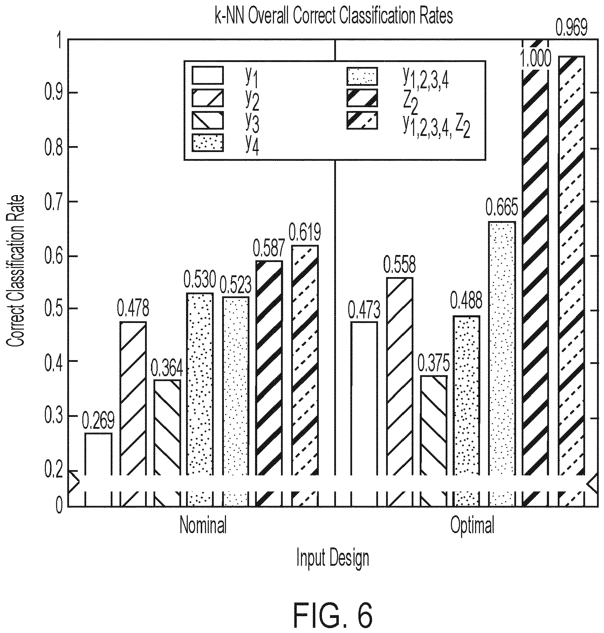

with the most promising inferential sensor being inferential sensor $z_2$, as is evidenced by the Monte Carlo simulation results depicted in FIGS. 5A-5C. FIGS. 5A-5C depict simulation results for inferential sensors $z_1$-$z_3$, respectively. These simulations were performed using the optimal input operating condition $\mathbf{u}_{opt}$. Inferential sensor $z_2$ greatly reduces the noise caused by uncertainty and improves the separation of the four scenarios studied. When applying this additional sensor - inferential sensor $z_2$ - to k-NN classification, the improvement is even more apparent. Table 4 presents for each operating point the sensor fused k-NN classification, which equally weights the information from all sensors when classifying, the individual classification of inferential sensor $z_2$, and the sensor fused classification including inferential sensor $z_2$. The individual and fused overall correct classification rates are also shown in FIG. 6. For the "Nominal" operating point, the benefit of the inferential sensor isn't as obvious; however, for the "Optimal" operating point, the inferential sensor improves the overall correct classification rate from 67% to 100%.

**Table 3: confusion matrices for each output at the optimal operating point using a k-NN value of 21.**

| $y_1$: Ram | Temp | $A_{CC} =$ | 0.4725 | | $y_2$: Bleed | Temp | $A_{CC} =$ | 0.5583 | |
|---|---|---|---|---|---|---|---|---|---|
| Predicted | | Actual | | | Predicted | | Actual | | |
| | $c^{[0]}$ | $c^{[1]}$ | $c^{[2]}$ | $c^{[3]}$ | | $c^{[0]}$ | $c^{[1]}$ | $c^{[2]}$ | $c^{[3]}$ |
| $\hat{c}^{[0]}$ | **0.48** | 0.35 | 0.14 | 0.03 | $\hat{c}^{[0]}$ | **0.57** | 0.36 | 0.07 | 0.00 |
| $\hat{c}^{[1]}$ | 0.34 | **0.34** | 0.22 | 0.05 | $\hat{c}^{[1]}$ | 0.30 | **0.39** | 0.23 | 0.02 |
| $\hat{c}^{[2]}$ | 0.15 | 0.24 | **0.36** | 0.21 | $\hat{c}^{[2]}$ | 0.11 | 0.21 | **0.49** | 0.19 |
| $\hat{c}^{[3]}$ | 0.03 | 0.07 | 0.28 | **0.71** | $\hat{c}^{[3]}$ | 0.02 | 0.04 | 0.21 | **0.79** |
| | | | | | | | | | |
| $y_3$: Ram | Pressure | $A_{CC} =$ | 0.3750 | | $y_4$: Bleed | Pressure | $A_{CC} =$ | 0.4878 | |
| Predicted | | Actual | | | Predicted | | Actual | | |
| | $c^{[0]}$ | $c^{[1]}$ | $c^{[2]}$ | $c^{[3]}$ | | $c^{[0]}$ | $c^{[1]}$ | $c^{[2]}$ | $c^{[3]}$ |
| $\hat{c}^{[0]}$ | **0.34** | 0.30 | 0.22 | 0.08 | $\hat{c}^{[0]}$ | **0.52** | 0.37 | 0.12 | 0.01 |
| $\hat{c}^{[1]}$ | 0.33 | **0.31** | 0.26 | 0.13 | $\hat{c}^{[1]}$ | 0.30 | **0.33** | 0.25 | 0.05 |
| $\hat{c}^{[2]}$ | 0.20 | 0.20 | **0.25** | 0.20 | $\hat{c}^{[2]}$ | 0.14 | 0.21 | **0.36** | 0.20 |
| $\hat{c}^{[3]}$ | 0.13 | 0.19 | 0.27 | **0.59** | $\hat{c}^{[3]}$ | 0.04 | 0.09 | 0.27 | **0.74** |

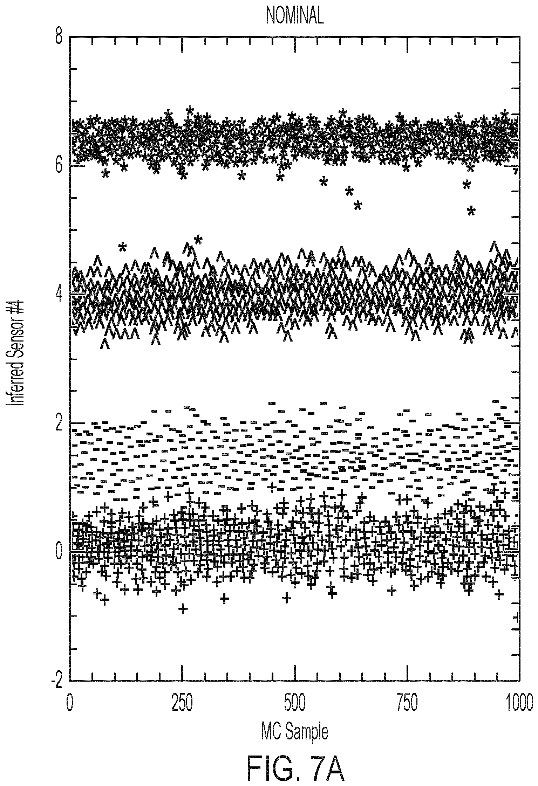

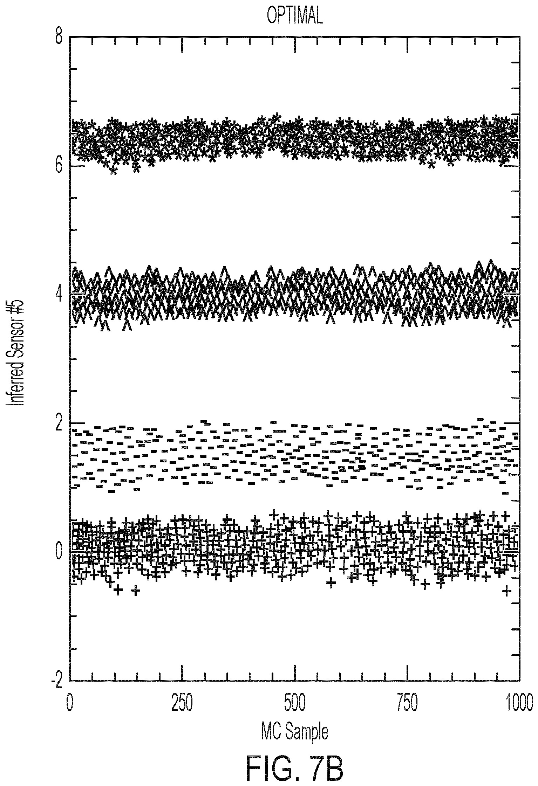

To further expand the method, genetic programming was also used to explicitly infer the value of thermal fouling resistance $R_f$ from the measured outputs by minimizing the squared error between the actual and predicted values over the uncertainty. This objective was supplied to equation (5) and resulted in the uncertain predictions of fouling shown in FIGS. 7A-7B. The two plots show the optimal inferential sensors $z_4$ and $z_5$ at the "Nominal" and "Optimal" operating points, respectively, using the measured outputs as the independent variables. Inferential sensors z4 and z5 are given below:

$$z_4 = -31.94 + 28.40 \sin\left(\sqrt{y_1}\right) + 28.40 \sin(y_1^{0.25}) + 1.43 \sin(y_4) -$$

$$28.40\sqrt{y_1}\cos(y_4) - 0.00019\exp\left(\sqrt{y_1}\right) + 3.50\cos(y_4)\left(y_1 + \sqrt{y_2}\right) \qquad (15)$$

$$z_4 = 3.26 + 0.024 y_1 y_2 - 0.01 y_1^2 - 0.01 y_2^2.$$

From an eye test, the accuracy of the inferential sensor when predicting the values of thermal fouling resistance for each scenario ($R_f$ = {0, 1.4, 4.0, 6.4}) is satisfactory. Due to the degree of separation between the four scenarios, it is anticipated that the overall correct classification rate when using the optimal inferential sensors $z_4$ and $z_5$ will be 100% at their respective operating point, similar to the correct classification rate when using the arbitrary inferential sensor $z_2$ at the "optimal" operating point. However, it is reminded that the arbitrary inferential sensor $z_2$ had a correct classification rate of only 62% at the "nominal" operating point, proving the need and value in optimization of inferential sensors for diagnostics.

**Table 4: confusion matrices for sensor fusion of outputs and latent variables at the nominal design using a k-NN value of 21.**

| $y_{1,2,3,4}$: | nominal | u | $A_{CC} =$ | 0.52 | | $y_{1,2,3,4}$: | optimal | u | $A_{CC} =$ | 0.66 |
|---|---|---|---|---|---|---|---|---|---|---|
| Predicted | | Actual | | | | Predicted | | Actual | | |
| | $c^{[0]}$ | $c^{[1]}$ | $c^{[2]}$ | $c^{[3]}$ | | | $c^{[0]}$ | $c^{[1]}$ | $c^{[2]}$ | $c^{[3]}$ |
| $\hat{c}^{[0]}$ | **0.58** | 0.42 | 0.14 | 0.01 | | $\hat{c}^{[0]}$ | **0.68** | 0.42 | 0.06 | 0.00 |
| $\hat{c}^{[1]}$ | 0.27 | **0.30** | 0.20 | 0.02 | | $\hat{c}^{[1]}$ | 0.26 | **0.42** | 0.14 | 0.00 |
| $\hat{c}^{[2]}$ | 0.13 | 0.23 | **0.41** | 0.17 | | $\hat{c}^{[2]}$ | 0.03 | 0.11 | **0.57** | 0.01 |
| $\hat{c}^{[3]}$ | 0.02 | 0.05 | 0.25 | **0.80** | | $\hat{c}^{[3]}$ | 0.03 | 0.05 | 0.23 | **0.99** |

(continued)

| $y_{1,2,3,4}$: | nominal | u | | $A_{CC} =$ | 0.52 | $y_{1,2,3,4}$: | optimal | u | | $A_{CC} =$ | 0.66 |
|---|---|---|---|---|---|---|---|---|---|---|---|
| Predicted | | Actual | | | | Predicted | | Actual | | | |
| | $c^{[0]}$ | $c^{[1]}$ | $c^{[2]}$ | $c^{[3]}$ | | | $c^{[0]}$ | $c^{[1]}$ | $c^{[2]}$ | $c^{[3]}$ | |
| | | | | | | | | | | | |

| $z_2$: | nominal | u | | $A_{CC} =$ | 0.59 | $z_2$: | optimal | u | | $A_{CC} =$ | 1.00 |
|---|---|---|---|---|---|---|---|---|---|---|---|
| Predicted | | Actual | | | | Predicted | | Actual | | | |
| | $c^{[0]}$ | $c^{[1]}$ | $c^{[2]}$ | $c^{[3]}$ | | | $c^{[0]}$ | $c^{[1]}$ | $c^{[2]}$ | $c^{[3]}$ | |
| $\hat{c}^{[0]}$ | 0.56 | 0.35 | 0.08 | 0.00 | | $\hat{c}^{[0]}$ | 1.00 | 0.00 | 0.00 | 0.00 | |
| $\hat{c}^{[1]}$ | 0.32 | 0.39 | 0.19 | 0.01 | | $\hat{c}^{[1]}$ | 0.00 | 1.00 | 0.00 | 0.00 | |
| $\hat{c}^{[2]}$ | 0.11 | 0.25 | 0.55 | 0.14 | | $\hat{c}^{[2]}$ | 0.00 | 0.00 | 1.00 | 0.00 | |
| $\hat{c}^{[3]}$ | 0.01 | 0.01 | 0.18 | 0.85 | | $\hat{c}^{[3]}$ | 0.00 | 0.00 | 0.00 | 1.00 | |

| $y_{1,2,3,4},z_2$: | nominal | u | | $A_{CC} =$ | 0.62 | $y_{1,2,3,4},z_2$: | optimal | u | | $A_{CC} =$ | 0.97 |
|---|---|---|---|---|---|---|---|---|---|---|---|
| Predicted | | Actual | | | | Predicted | | Actual | | | |
| | $c^{[0]}$ | $c^{[1]}$ | $c^{[2]}$ | $c^{[3]}$ | | | $c^{[0]}$ | $c^{[1]}$ | $c^{[2]}$ | $c^{[3]}$ | |
| $\hat{c}^{[0]}$ | **0.67** | 0.43 | 0.09 | 0.00 | | $\hat{c}^{[0]}$ | **1.00** | 0.03 | 0.01 | 0.00 | |
| $\hat{c}^{[1]}$ | 0.25 | **0.34** | 0.15 | 0.00 | | $\hat{c}^{[1]}$ | 0.00 | **0.95** | 0.00 | 0.00 | |
| $\hat{c}^{[2]}$ | 0.07 | 0.19 | **0.53** | 0.06 | | $\hat{c}^{[2]}$ | 0.00 | 0.00 | **0.92** | 0.00 | |
| $\hat{c}^{[3]}$ | 0.01 | 0.04 | 0.23 | **0.94** | | $\hat{c}^{[3]}$ | 0.00 | 0.02 | 0.07 | **1.00** | |

The anticipation of $z_4$ and $z_5$ having 100% correct classification rates is confirmed in Table 5. Additionally, the $D_S$-optimality values from equation (6) are shown for the respective inferential sensors at different anticipated values of fouling. The best performing inferential sensor in terms of $D_S$-optimality depends on the level of fouling present. For the two lower values of fouling ( $R_f^{[0]}$ and $R_f^{[1]}$ ) the best performing inferential sensor is $z_5$ and for the two higher levels of fouling ( $R_f^{[2]}$ and $R_f^{[3]}$ ) the best performing inferential sensor is $z_2$. These two sensors are able to significantly reduce the impact of uncertainty and completely discern the different fouling levels from one another.

**Table 5:** Corresponding Ds-opt values from equation (6) for the 5 inferential sensors studied, along with their respective correct classification rates.

| Inferential Sensor | $\log D_s - \mathrm{opt}(R_f)$: $R_f^{[0]}$ | $R_f^{[1]}$ | $R_f^{[2]}$ | $R_f^{[3]}$ | $\sum_{i=0}^{3} R_f^{[i]}$ | $A_{CC}$ |
|---|---|---|---|---|---|---|
| $z_1$: | -3.684 | -3.684 | -3.684 | -3.682 | -14.734 | 0.3533 |
| $z_2$: | -1.654 | -1.659 | **-0.587** | **-0.054** | **-2.465** | **1.0000** |
| $z_3$: | -3.684 | -3.683 | -3.668 | -3.614 | -14.649 | 0.8267 |
| $z_4$: | -3.387 | -3.821 | -3.395 | -3.161 | -13.764 | **1.0000** |
| $z_5$: | **-0.646** | **-0.991** | -1.102 | -1.423 | -4.162 | **1.0000** |

**Discussion of Possible Embodiments**

The following are non-exclusive descriptions of possible embodiments of the present invention.

Apparatus and associated methods relate to a system for heat exchange with built-in fault-detection-and-identification (FDI) test design capability. The system includes a cross-flow plate/fin heat exchanger (PFHE), a plurality of input sensors, each configured to measure an input operating condition of the PFHE, one or more output sensors, each configured to measure an output parameter of the PFHE, one or more processors, and computer-readable memory. The computer-readable memory is encoded with instructions that, when executed by the one or more processors, cause the system to perform the step of a) retrieving a PFHE model that relates the output parameters to the input operating conditions and fault conditions. The computer-readable memory is encoded with instructions that, when executed by the one or more processors, cause the system to perform the step of b) creating inferential sensors, each based on a functional relation of at least two of the input operating conditions and/or the output parameters. The computer-readable memory is encoded with instructions that, when executed by the one or more processors, cause the system to perform the step of c) simulating, based on the received PFHE model, combinations of input operating conditions and fault conditions so as to provide simulated values of both the output parameters and the inferential sensors for each of the simulated combinations. The computer-readable memory is encoded with instructions that, when executed by the one or more processors, cause the system to perform the step of d) calculating parametric sensitivities of the output parameters and the inferential sensors to the fault conditions. The computer-readable memory is encoded with instructions that, when executed by the one or more processors, cause the system to perform the step of e) evolving, using genetic programming, the inferential sensors based on the calculated parametric sensitivities of the output parameters and the inferential sensors to the fault conditions. The computer-readable memory is encoded with instructions that, when executed by the one or more processors, cause the system to perform the step of f) repeating steps c) through e) until a termination condition is realized. The computer-readable memory is encoded with instructions that, when executed by the one or more processors, cause the system to perform the step of g) creating the built-in test based on a selected testing combination of input operating conditions and a selected measuring combination of the output parameters and the inferential sensors.

The system of the preceding paragraph can optionally include, additionally and/or alternatively, any one or more of the following features, configurations and/or additional components:

A further embodiment of the foregoing system, wherein the PFHE model can further relate the output parameters to PFHE uncertainties.

A further embodiment of any of the foregoing systems, wherein the PFHE uncertainties can include uncertainties in measurements of the input operating conditions.

A further embodiment of any of the foregoing systems, wherein the PFHE uncertainties can include uncertainties in measurements of the output parameters.

A further embodiment of any of the foregoing systems, wherein the calculated parametric sensitivities can further include sensitivities of the output parameters and the inferential sensors to the input parameters.

Some embodiments relate to a method for designing a built-in fault-detection-and-identification (FDI) test for a system that has measurable input operating conditions and output parameters. The method includes the step of a) retrieving a system model that relates the output parameters to the input operating conditions and fault conditions. The method includes the step of b) creating inferential sensors, each based on a functional relation of at least two of the input operating conditions and/or the output parameters. The method includes the step of c) simulating, based on the received system model using combinations of the input operating conditions and fault conditions, measurement values of the output parameters and inferential sensors. The method includes the step of d) calculating parametric sensitivities of the output parameters and the inferential sensors to the fault conditions. The method includes the step of e) evolving, using genetic programming, the inferential sensors based on the calculated parametric sensitivities of the output parameters and the inferential sensors to the fault conditions. The method includes the step of f) repeating steps c) through e) until a termination condition is realized. The method includes the step of g) creating the built-in test based on a selected testing combination of input operating conditions and a selected measuring combination of the output parameters and the inferential sensors.

The method of the preceding paragraph can optionally include, additionally and/or alternatively, any one or more of the following features, configurations and/or additional components:

A further embodiment of the foregoing method, wherein the system model can further relate the output parameters to system uncertainties.

A further embodiment of any of the foregoing methods, wherein the system uncertainties can include uncertainties in measurements of the input operating conditions.

A further embodiment of any of the foregoing methods, wherein the system uncertainties can include uncertainties in measurements of the output parameters.

A further embodiment of any of the foregoing methods, wherein the calculated parametric sensitivities can further include sensitivities of the output parameters and the inferential sensors to the input parameters.

A further embodiment of any of the foregoing methods, wherein evolving the inferential sensors can further include retaining a selection inferential sensor corresponding to a maximally sensitive one of the calculated parametric sensitivities of the plurality of inferential sensors to the fault conditions.

A further embodiment of any of the foregoing methods, wherein evolving the inferential sensors can further include creating a crossover inferential variable that retains a common portion of the functional relation of two of the inferential sensors.

A further embodiment of any of the foregoing methods, wherein evolving the inferential sensors can further include creating a mutation inferential variable that changes a common portion of the functional relation of two of the inferential sensors.

A further embodiment of any of the foregoing methods can further include the step of selecting an initial combination of input operating conditions.

A further embodiment of any of the foregoing methods can further include the step of evolving the combination of input operating conditions.

A further embodiment of any of the foregoing methods can further include the step of calculating parameter sensitivities of the inferential sensors and the output parameters to the fault conditions.

A further embodiment of any of the foregoing methods, wherein the termination condition can be realized in response to a change in parameter sensitivities between repetitions falling below a percentage threshold.

A further embodiment of any of the foregoing methods can further include the step of generating a fault condition classification based on the simulated measurement values of the output parameters and inferential sensors.

A further embodiment of any of the foregoing methods can further include the step of comparing the fault condition classification with fault condition so as to assess the quality of the fault condition classification.

A further embodiment of any of the foregoing methods can further include the step of determining correct classification rates based on the comparison of the fault condition classification with the fault condition.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

**Claims**

1. A method for designing a built-in fault-detection-and-identification (FDI) test for a system that has measurable input operating conditions and output parameters, the method comprising the steps of:

   a) Retrieving (14) a system model that relates the output parameters to the input operating conditions and fault conditions;
   b) creating inferential sensors, each based on a functional relation of at least two of the input operating conditions and/or the output parameters;
   c) simulating (16), based on the received system model using combinations of the input operating conditions and fault conditions, measurement values of the output parameters and inferential sensors;
   d) calculating parametric sensitivities of the output parameters and the inferential sensors to the fault conditions and to the uncertainties;
   e) evolving, using genetic programming, the inferential sensors based on the calculated parametric sensitivities of the output parameters and the inferential sensors to the fault conditions;
   f) repeating steps c) through e) until a termination condition is realized; and
   g) creating the built-in test based on a selected testing combination of input operating conditions and a selected measuring combination of the output parameters and the inferential sensors.

2. The method of claim 1, wherein the system model further relates the output parameters to system uncertainties.

3. The method of claim 2, wherein the system uncertainties include uncertainties in measurements of the input operating conditions, or
   wherein the system uncertainties include uncertainties in measurements of the output parameters.

4. The method of any preceding claim, wherein the calculated parametric sensitivities further include sensitivities of the output parameters and the inferential sensors to the input parameters.

5. The method of any preceding claim, wherein evolving the inferential sensors includes:
   retaining a selection inferential sensor corresponding to a maximally sensitive one of the calculated parametric sensitivities of the plurality of inferential sensors to the fault conditions.

6. The method of any preceding claim, wherein evolving the inferential sensors includes:
   creating a crossover inferential variable that retains a common portion of the functional relation of two of the inferential sensors.

7. The method of any preceding claim, wherein evolving the inferential sensors includes:
   creating a mutation inferential variable that changes a common portion of the functional relation of two of the inferential sensors.

8. The method of any preceding claim, further comprising the step of:
   selecting an initial combination of input operating conditions, and optionally
   further comprising the step of:
   evolving the combination of input operating conditions.

9. The method of any preceding claim, further comprising the step of:
   calculating parameter sensitivities of the inferential sensors and the output parameters to the fault conditions, and optionally wherein the termination condition is realized in response to a change in parameter sensitivities between repetitions falling below a percentage threshold.

10. The method of any preceding claim, further comprising the step of:
    generating a fault condition classification based on the simulated measurement values of the output parameters and inferential sensors.

11. The method of claim 10, further comprising the step of:
    comparing the fault condition classification with fault condition so as to assess the quality of the fault condition classification, and optionally
    further comprising the step of:
    determining correct classification rates based on the comparison of the fault condition classification with the fault condition.

12. A system for heat exchange with built-in fault-detection-and-identification (FDI) test design capability, the system comprising:

    a cross-flow plate/fin heat exchanger (PFHE);
    a plurality of input sensors, each configured to measure an input operating condition of the PFHE;
    one or more output sensors, each configured to measure an output parameter of the PFHE;
    one or more processors; and
    computer-readable memory encoded with instructions that, when executed by the one or more processors, cause the system to perform the steps of:

    a) retrieving a PFHE model that relates the output parameters to the input operating conditions and fault conditions;
    b) creating inferential sensors, each based on a functional relation of at least two of the input operating conditions and/or the output parameters;
    c) simulating, based on the received PFHE model, combinations of input operating conditions and fault conditions so as to provide simulated values of both the output parameters and the inferential sensors for each of the simulated combinations;
    d) calculating parametric sensitivities of the output parameters and the inferential sensors to the fault conditions and to the uncertainties;
    e) evolving, using genetic programming, the inferential sensors based on the calculated parametric sensitivities of the output parameters and the inferential sensors to the fault conditions;
    f) repeating steps c) through e) until a termination condition is realized; and
    g) creating the built-in test based on a selected testing combination of input operating conditions and a selected measuring combination of the output parameters and the inferential sensors.

13. The system of claim 12, wherein the PFHE model also relates the output parameters to PFHE uncertainties.

**14.** The system of claim 13, wherein the PFHE uncertainties include uncertainties in measurements of the input operating conditions, or

wherein the PFHE uncertainties include uncertainties in measurements of the output parameters.

**15.** The system of any of claims 12 to 14, wherein the calculated parametric sensitivities further include sensitivities of the output parameters and the inferential sensors to the input parameters.

FIG. 1

FIG. 2

FIG. 3A

FIG. 3B

FIG. 3C

FIG. 3D

OPTIMAL

FIG. 4A

OPTIMAL

FIG. 4B

OPTIMAL

FIG. 4C

FIG. 4D

FIG. 5A

FIG. 5B

FIG. 5C

FIG. 6

FIG. 7A

FIG. 7B

| | Europäisches Patentamt European Patent Office Office européen des brevets | **EUROPEAN SEARCH REPORT** | **Application Number** EP 19 21 6304 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 104 112 A2 (HAMILTON SUNDSTRAND CORP [US]) 14 December 2016 (2016-12-14) * paragraphs [0001], [0004] - [0006], [0008], [0012], [0015] - [0045]; figures 1,4,5,6 * ----- | 1-15 | INV. G05B23/02 G06N3/12 |
| Y | WO 2008/115655 A1 (DOW GLOBAL TECHNOLOGIES INC [US]; SMITS GUIDO FREDDY [BE] ET AL.) 25 September 2008 (2008-09-25) * page 1, line 7 - line 18 * * page 2, line 13 - page 3, line 10 * * page 4, line 3 - page 5, line 12 * * page 8, line 15 - page 9, line 5 * * page 11, line 11 - line 18 * * page 15, line 8 - page 16, line 26 * * figure 3 * ----- | 1-15 | |
| A | NAJJAR NAYEFF ET AL: "Optimal Sensor Selection and Fusion for Heat Exchanger Fouling Diagnosis in Aerospace Systems", IEEE SENSORS JOURNAL, IEEE SERVICE CENTER, NEW YORK, NY, US, vol. 16, no. 12, 1 June 2016 (2016-06-01), pages 4866-4881, XP011610638, ISSN: 1530-437X, DOI: 10.1109/JSEN.2016.2549860 [retrieved on 2016-05-17] * the whole document * ----- | 1-15 | TECHNICAL FIELDS SEARCHED (IPC) G05B G06N |

The present search report has been drawn up for all claims

| Place of search | Date of completion of the search | Examiner |
|---|---|---|
| Munich | 13 July 2020 | Postemer, Patricia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 21 6304

This annex lists the patent family members relating to the patent documents cited in the above-mentioned European search report.
The members are as contained in the European Patent Office EDP file on
The European Patent Office is in no way liable for these particulars which are merely given for the purpose of information.

13-07-2020

| Patent document cited in search report | | Publication date | Patent family member(s) | Publication date |
|---|---|---|---|---|
| EP 3104112 | A2 | 14-12-2016 | BR 102016013165 A2 | 27-12-2016 |
| | | | CA 2932665 A1 | 08-12-2016 |
| | | | CN 106446318 A | 22-02-2017 |
| | | | EP 3104112 A2 | 14-12-2016 |
| | | | US 2016356677 A1 | 08-12-2016 |
| WO 2008115655 | A1 | 25-09-2008 | CN 101636698 A | 27-01-2010 |
| | | | EP 2130099 A1 | 09-12-2009 |
| | | | JP 2010522376 A | 01-07-2010 |
| | | | US 2010049340 A1 | 25-02-2010 |
| | | | WO 2008115655 A1 | 25-09-2008 |

For more details about this annex : see Official Journal of the European Patent Office, No. 12/82

**REFERENCES CITED IN THE DESCRIPTION**

**Non-patent literature cited in the description**

- **PALMER et al.** Optimal design of tests for heat exchanger fouling identification. *Applied Thermal Engineering,* 2016, vol. 95, 382-393